# EUROPEAN PATENT APPLICATION

(11) **EP 4 556 595 A1**
(43) Date of publication of application: **21.05.2025**
(21) Application number: 23860168.6
(22) Date of filing: 24.08.2023
(51) Int. Cl.: C25B 1/23, C01B 32/50, C25B 3/07, C25B 3/26, C25B 9/00, C25B 15/08

(54) **CARBON DIOXIDE ABSORPTION AND REDUCTION SOLUTION, CARBON DIOXIDE ABSORPTION AND REDUCTION DEVICE, AND CARBON DIOXIDE ABSORPTION AND REDUCTION METHOD**

(30) Priority: 01.09.2022 JP 2022139349
(71) Applicant: Mitsubishi Heavy Industries, Ltd., Tokyo 100-8332 (JP); INSTITUTE OF SCIENCE TOKYO, Tokyo 152-8550 (JP)
(72) Inventor: TSUJIUCHI, Tatsuya, Tokyo 100-8332 (JP); TAJIMA, Hidehiko, Tokyo 100-8332 (JP); NASU, Yusaku, Tokyo 100-8332 (JP); ISHITANI, Osamu, Tokyo 152-8550 (JP); MIYAJI, Masahiko, Tokyo 152-8550 (JP)
(74) Representative: Studio Torta S.p.A.
(86) International application number: PCT/JP2023/030430
(87) International publication number: WO 2024/048405

(57) **Abstract**

A carbon dioxide absorption and reduction solution contains 0.01 to 100 mM of a metal complex, and a basic additive having an amidine structure or a guanidine structure in a protic polar solvent.

## Description

### TECHNICAL FIELD

The present disclosure relates to a carbon dioxide absorption and reduction solution, a carbon dioxide absorption and reduction device, and a carbon dioxide absorption and reduction method.

The present application claims priority based on Japanese Patent Application No. 2022-139349 filed on September 1, 2022, the entire content of which is incorporated herein by reference.

### BACKGROUND ART

When fossil fuels are burned in power plants and chemical plants, a large amount of carbon dioxide is produced, which is one cause of global warming. Therefore, attention is focused on carbon circulation process for recovering and effectively using carbon dioxide, or converting carbon dioxide into valuable resources. As examples of the method of converting carbon dioxide into valuable resources, there may be mentioned electrochemical reduction and photo-electrochemical reduction using light energy. Metal complexes can be used as catalysts for such electrochemical reduction and photo-electrochemical reduction. Patent Document 1 describes a method for electrochemically reducing carbon dioxide using an electrolytic solution prepared by mixing a protic polar solvent such as triethanolamine into an excessive amount of non-protic polar solvent such as N,N-dimethylformamide or dimethylacetamide, with the addition of a metal complex.

### Citation List

### Patent Literature

Patent Document 1: JP6615175B

### SUMMARY

### Problems to be Solved

However, the inventors of the present disclosure have found that electrochemical reduction of carbon dioxide using a solution composed solely of a protic polar solvent with a metal complex added results in the production of hydrogen, which reduces the selectivity to produce carbon monoxide.

In view of the above, an object of at least one embodiment of the present disclosure is to provide a carbon dioxide absorption and reduction solution, a carbon dioxide absorption and reduction device, and a carbon dioxide absorption and reduction method whereby it is possible to selectively produce carbon monoxide by electrochemical reduction of carbon dioxide.

### Solution to the Problems

In order to achieve the above object, a carbon dioxide absorption and reduction solution according to the present disclosure contains: 0.01 to 100 mM of a metal complex; and a basic additive having an amidine structure or a guanidine structure in a protic polar solvent.

### Advantageous Effects

With the carbon dioxide absorption and reduction solution according to the present disclosure, by using this carbon dioxide absorption and reduction solution as an electrolytic solution for electrochemical reduction of carbon dioxide, it is possible to selectively produce carbon monoxide.

### BRIEF DESCRIPTION OF DRAWINGS

FIG. 1 is a schematic configuration diagram of a carbon dioxide absorption and reduction device according to an embodiment of the present disclosure.
FIG. 2 is a schematic configuration diagram of a carbon dioxide absorption and reduction device according to a modification of the present disclosure.
FIG. 3 is a schematic configuration diagram of a carbon dioxide absorption and reduction device according to another modification of the present disclosure.
FIG. 4 is a schematic configuration diagram of an experimental apparatus for experiments in Experiments 1 to 3 and Comparative Examples 1 and 2.
FIG. 5 is a graph showing an experimental result of Example 1.
FIG. 6 is a graph showing an experimental result when gas with 100% carbon dioxide concentration is used in Example 2.
FIG. 7 is a graph showing an experimental result when gas with 10% carbon dioxide concentration is used in Example 2.
FIG. 8 is a graph showing an experimental result of Example 3.
FIG. 9 is a graph showing an experimental result of Comparative Example 1.
FIG. 10 is a graph showing an experimental result of Comparative Example 2.

### DETAILED DESCRIPTION

Hereinafter, a carbon dioxide absorption and reduction solution according to embodiments of the present disclosure will be described with reference to the drawings. The embodiment to be described below indicates one aspect of the present disclosure, does not intend to limit the disclosure, and can optionally be modified within a range of a technical idea of the present disclosure.

### <Carbon dioxide absorption and reduction solution according to embodiment of present disclosure>

The carbon dioxide absorption and reduction solution according to an embodiment of the present disclosure is used as an electrolytic solution for electrolysis, and carbon dioxide supplied to the electrolytic solution is reduced to valuable substances such as carbon monoxide and formic acid electrochemically, specifically through electrolysis. This carbon dioxide absorption and reduction solution contains a metal complex and a basic additive having an amidine structure or a guanidine structure in a protic polar solvent.

The metal complex is not particularly limited, and any complex can be used. For example, as the metal complex, those represented by the following molecular structure (1) can be used. The concentration of the metal complex in the carbon dioxide absorption and reduction solution is 0.01 to 100 mM as disclosed in Patent Document 1 based on the previous research of one of the inventors of this disclosure.

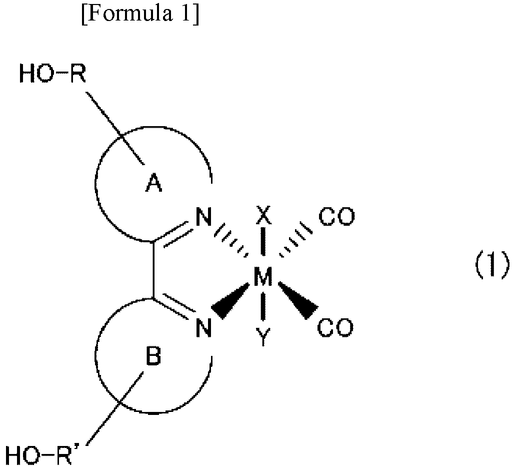

In molecular structure (1), M, the central metal of the metal complex, is either rhenium, manganese, ruthenium, or iron. In molecular structure (1), the metal complex contains at least two carbonyl groups, at least two nitrogen atom-containing heterocycles A and B, and ligands X and Y as ligands for the central metal M. There is no limitation on ligands X and Y, but they may be any functional group, such as a chain or cyclic alkyl group or a functional group containing oxygen, nitrogen, sulfur, phosphorus, or halogen, or may be a carbonyl group or a nitrogen atom-containing heterocycle, or may be water or a hydroxy group.

The at least two nitrogen atom-containing heterocycles may have the same or different structures. At least one of the two nitrogen atom-containing heterocycles A and B of the metal complex represented by molecular structure (1) has a substituent containing a hydroxy group (-R-OH/-R'-OH) as a functional group. In molecular structure (1), both nitrogen atom-containing heterocycles A and B have substituents containing hydroxy groups, but either one of the nitrogen atom-containing heterocycles may have a substituent containing a hydroxy group. In the case where the metal complex has three or more nitrogen atom-containing heterocycles, at least one nitrogen atom-containing heterocycle may have a substituent containing a hydroxy group. The substituent containing a hydroxy group makes the metal complex represented by molecular structure (1) water-soluble. However, the more carbon atoms in the structure with a substituent containing a hydroxy group, the less soluble the metal complex is in water. For this reason, a hydroxymethyl group or a hydroxyethyl group or a carboxy group are preferred as the substituent containing a hydroxy group.

As the protic polar solvent, water, an alcohol solvent, an amine solvent, a thiol solvent, or an amino alcohol solvent can be used.

The amidine structure of the additive is a structure in which one nitrogen atom is bonded to one carbon by a double bond and one nitrogen atom is bonded by a single bond, as represented by the following molecular structure (2). The guanidine structure of the additive is a structure in which one nitrogen atom is bonded to one carbon by a double bond and two nitrogen atoms are bonded by single bonds, as represented by the following molecular structure (3). In molecular structures (2) and (3), R¹, R², R³, R⁴, and R⁵ are each any functional group, hydrogen, or halogen. In molecular structure (2), R⁴ and R² or R³ may be linked together to form a carbon chain, or R¹ and R² or R³ may be linked together to form a carbon chain, or R¹ and R⁴ may be linked together to form a carbon chain so that a cyclic structure is formed. Further, in molecular structure (3), R¹ and R² or R³ may be linked together to form a carbon chain, or R¹ and R⁴ or R⁵ may be linked together to form a carbon chain, or R² or R³ and R⁴ or R⁵ may be linked together to form a carbon chain so that a cyclic structure is formed.

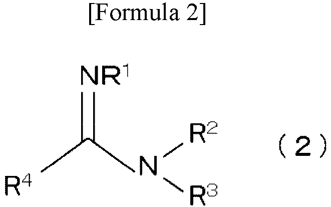

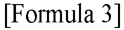

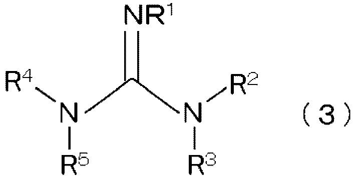

As the basic additive having an amidine structure, diazabicycloundecene (1,8-diazabicyclo[5.4.0]undeca-7-ene, DBU (registered trademark)), or diazabicyclononene (1,5-diazabicyclo[4.3.0]non-5-ene, DBN) can be used. As the basic additive having a guanine structure, tetramethylguanidine (TMG), 1,5,7-triazabicyclo[4.4.0]deca-5-ene (TBD), or 7-methyl-1,5,7-triazabicyclo[4.4.0]deca-5-ene (MTBD) can be used. The additive is not limited to one compound, but may be a mixture of at least two compounds. For example, a mixture of at least two of the above-described five additives may be used as the additive. The concentration of the additive in the carbon dioxide absorption and reduction solution is preferably 10 to 334 mM, based on the following Examples.

### <Carbon dioxide absorption and reduction device according to embodiment of present disclosure>

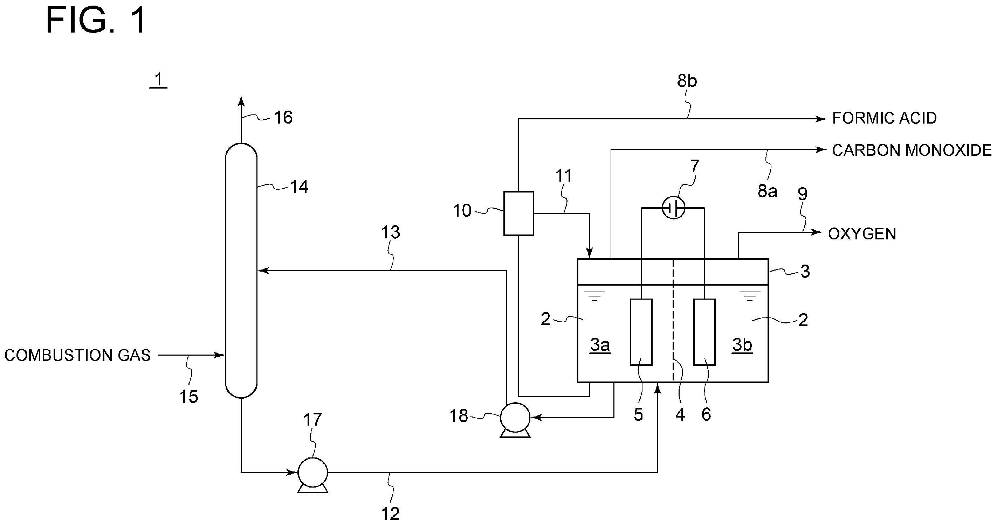

As shown in FIG. 1, a carbon dioxide absorption and reduction device 1 according to an embodiment of the present disclosure includes an electrolysis device 3 containing the above-described carbon dioxide absorption and reduction solution 2. The interior of the electrolysis device 3 is divided into a first chamber 3a and a second chamber 3b by a diaphragm 4. The electrolysis device 3 is provided with a cathode 5 immersed in the carbon dioxide absorption and reduction solution 2 in the first chamber 3a and an anode 6 immersed in the carbon dioxide absorption and reduction solution 2 in the second chamber 3b. Each of the cathode 5 and the anode 6 is electrically connected to a DC power supply 7.

The electrolysis device 3 is not limited to the configuration shown in FIG. 1, i.e., the cathode 5 and the anode 6 are each immersed in the carbon dioxide absorption and reduction solution 2 in the electrolyzer. Another example of the configuration may include an electrolyzer, a power supply electrically connected to the electrolyzer, a pipe for supplying liquid or gaseous reactants to the electrolyzer, and a pipe for discharging the products. As another example, the electrolyzer may be composed of an anode section, a cathode section, an electrolyte section, and an electrolyzer vessel with anode and cathode terminals, and the anode section electrically connected to the anode terminal and the cathode section electrically connected to the cathode terminal may be arranged on opposite sides of the electrolyte section in the electrolyzer. As yet another example, the anode section and the cathode section may be composed of a single member, with a catalytic electrode layer on a power feeding substrate to promote electrolysis reaction. As yet another example, a diaphragm may be arranged in the electrolyte section between the anode section and the cathode section to separate the products of the anode section from those of the cathode section. The diaphragm can be a porous membrane permeated with electrolyte or an ion-permeable non-porous membrane. As yet another example, the anode and cathode sections and the diaphragm may be placed apart or in contact with each other, and the two may be joined together to form a single unit. Yet another example may have an electrode junction membrane in which the electrodes (cathode 5 and anode 6) and the ion exchange membrane are bonded together.

Although the operation of the carbon dioxide absorption and reduction device 1 will be described below, carbon dioxide dissolved in the carbon dioxide absorption and reduction solution 2 is reduced by electrolysis to produce at least one of carbon monoxide or formic acid in the first chamber 3a and oxygen in the second chamber 3b. The carbon dioxide absorption and reduction device 1 is connected to first outflow lines 8a and 8b through which carbon monoxide and formic acid flow out of the first chamber 3a, respectively, and a second outflow line 9 through which oxygen flows out of the second chamber 3b. To allow carbon monoxide produced in the first chamber 3a to flow out of the first chamber 3a, the first outflow line 8a is connected to a gas phase portion of the first chamber 3a. To allow the carbon dioxide absorption and reduction solution 2 containing formic acid produced in the first chamber 3a to flow out of the first chamber 3a, the first outflow line 8b is connected to a liquid phase portion of the first chamber 3a, and the first outflow line 8b is provided with a separation device 10 to separate formic acid from the carbon dioxide absorption and reduction solution 2 flowing out of the first chamber 3a, for example, a distillation device or a membrane separation device, and with a return line 11 to return the carbon dioxide absorption and reduction solution 2 from which formic acid has been separated in the separation device 10 to the first chamber 3a. If only carbon monoxide is produced in the first chamber 3a and no formic acid is produced, there is no need to install the separation device 10.

When carbon dioxide is reduced in a batch process, as in the case where the carbon dioxide absorption and reduction solution 2 dissolved with carbon dioxide is supplied into the electrolysis device 3 and electrolyzed, or in the case where carbon dioxide is dissolved by supplying a gas containing carbon dioxide to the carbon dioxide absorption and reduction solution 2 supplied into the electrolysis device 3 and then decomposed, the above configuration is sufficient for the carbon dioxide absorption and reduction device 1. However, in order to continuously supply carbon dioxide to the electrolysis device 3 for continuous carbon dioxide reduction, a supply line 12 for supplying the carbon dioxide absorption and reduction solution 2 dissolved with carbon dioxide to the first chamber 3a and an outflow line 13 for discharging the carbon dioxide absorption and reduction solution 2 from the first chamber 3a are needed to connect to the first chamber 3a.

As a device for dissolving carbon dioxide into the carbon dioxide absorption and reduction solution 2, for example, but not limited to, an absorption tower 14 configured to bring a gas containing carbon dioxide into gas-liquid contact with the carbon dioxide absorption and reduction solution 2 as the absorption solution may be provided. To the absorption tower 14 is connected a gas supply line 15 for supplying a gas containing carbon dioxide, for example, combustion gas to the absorption tower 14 and a gas outflow line 16 for discharging the gas from which carbon dioxide has been removed from the absorption tower 14. The supply line 12 is connected to the bottom of the absorption tower 14, and the outflow line 13 is connected to the absorption tower 14 above the position where the gas supply line 15 is connected to the absorption tower 14. The supply line 12 and the outflow line 13 are provided with pumps 17 and 18, respectively.

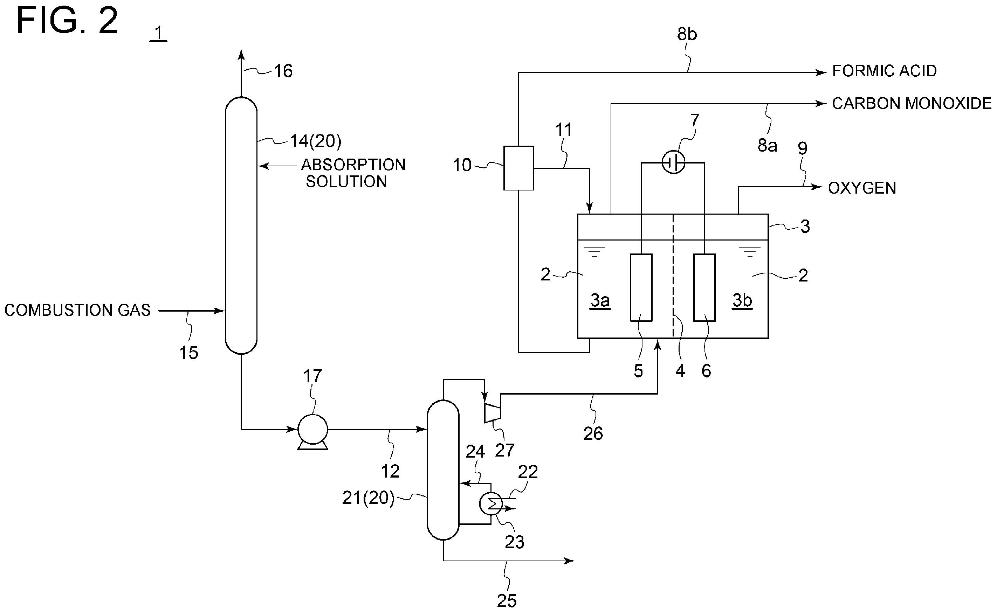

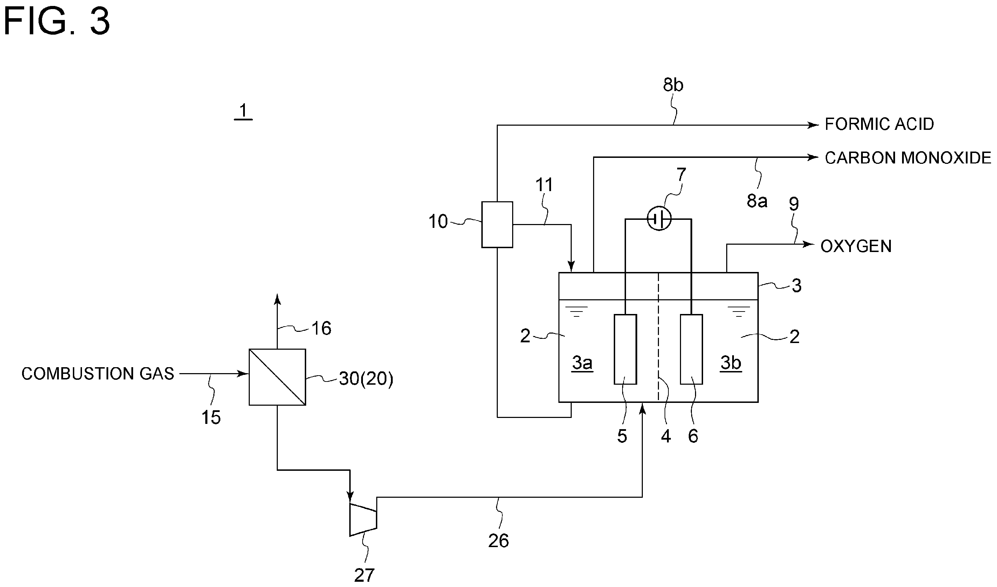

Some embodiments of the carbon dioxide absorption and reduction device 1 configured to reduce carbon dioxide in a batch process as described above are shown in FIGs. 2 and 3. The carbon dioxide absorption and reduction device 1 shown in FIG. 2 includes, as a carbon dioxide recovery device 20 for recovering carbon dioxide from a gas containing carbon dioxide, an absorption tower 14 configured to bring a gas containing carbon dioxide into gas-liquid contact with an absorption solution, and a regeneration tower 21 for releasing carbon dioxide from the absorption solution that has absorbed carbon dioxide in the absorption tower 14. Unlike the carbon dioxide absorption and reduction device 1 shown in FIG. 1, the absorption solution used in the absorption tower 14 is a different absorption solution than the carbon dioxide absorption and reduction solution 2. The absorption tower 14 and the regeneration tower 21 are connected by a supply line 12.

The regeneration tower 21 is equipped with a heat exchanger (reboiler) 23 that includes a heat medium flow passage 22 through which a heat medium (e.g., steam) flows and an absorption solution circulation passage 24 through which the absorption solution in the regeneration tower 21 flows out of the regeneration tower 21 and circulates back to the regeneration tower 21, so that the heat medium flowing through the heat medium flow passage 22 and the absorption solution circulating through the absorption solution circulation passage 24 exchange heat. The bottom of the regeneration tower 21 is connected to an extraction line 25 for extracting the absorption solution. The top of the regeneration tower 21 is connected to the other end of a gas supply line 26, one end of which is connected to the bottom of the first chamber 3a of the electrolysis device 3. The gas supply line 26 is provided with a compressor 27.

The carbon dioxide recovery device 20 is not limited to the configuration described above, including the absorption tower 14 and the regeneration tower 21. Any configuration is acceptable as long as it can recover carbon dioxide from a gas containing carbon dioxide and supply the recovered carbon dioxide to the carbon dioxide absorption and reduction solution 2 in the first chamber 3a of the electrolysis device 3. For example, the carbon dioxide absorption and reduction device 1 shown in FIG. 3 is equipped with a membrane separation device 30 capable of separating carbon dioxide as the carbon dioxide recovery device 20. The membrane separation device 30 is connected to a gas outflow line 16 for discharging the gas from which carbon dioxide has been separated from the membrane separation device 30. The membrane separation device 30 is connected to the bottom of the first chamber 3a through a gas supply line 26 so that the separated carbon dioxide can be fed into the first chamber 3a. The gas supply line 26 is provided with a compressor 27.

### <Operation of carbon dioxide absorption and reduction device according to embodiment of present disclosure>

The operation of the carbon dioxide absorption and reduction solution 2 (carbon dioxide absorption and reduction method) will be now described based on FIG. 1. The absorption tower 14 is supplied with a gas containing carbon dioxide, e.g., combustion gas discharged from a combustion facility (not shown), via the gas supply line 15. The combustion gas supplied to the absorption tower 14 rises up in the absorption tower 14. Further, the absorption tower 14 is supplied with the carbon dioxide absorption and reduction solution 2 as the absorption solution via the outflow line 13. The absorption solution supplied to the absorption tower 14 falls down in the absorption tower 14. In the absorption tower 14, the rising combustion gas and the falling absorption solution come into gas-liquid contact, so that carbon dioxide contained in the combustion gas is absorbed by the absorption solution, and the combustion gas from which carbon dioxide has been removed flows out of the absorption tower 14 through the gas outflow line 16. The absorption solution that has absorbed carbon dioxide is accumulated in a lower portion of the absorption tower 14, but the absorption solution is extracted from the absorption tower 14 by the pump 17 and supplied to the first chamber 3a of the electrolysis device 3 through the supply line 12.

When the DC power supply 7 applies a voltage between the cathode 5 and the anode 6 in the electrolysis device 3, at least one of carbon monoxide or formic acid is produced in the first chamber 3a by the catalytic action of the metal complex dissolved in the carbon dioxide absorption and reduction solution 2, as shown in the following semi-reaction equations (A) and (B). On the other hand, oxygen is produced in the second chamber 3b as shown in the following semi-reaction equation (C). Here, water is used as the protic polar solvent, but other protic solvents may be used.

CO₂ + H₂O + 2e⁻ → CO + 20H⁻ (A)

CO₂ + 2H₂O + 2e⁻ → HCOOH + 2OH⁻ (B)

2OH⁻ → (1/2)O₂ + H₂O + 2e⁻ (C)

It is rare that only one of the half-reaction equation (A) or (B) occurs, and usually both reactions occur simultaneously, with the ratio of both reactions varying depending on the type of metal complex. In other words, the production ratio of carbon monoxide and formic acid varies depending on the type of metal complex used, reaction solvent, or applied voltage.

Carbon monoxide produced in the first chamber 3a flows out of the first chamber 3a via the first outflow line 8a and is sent to a facility that uses carbon monoxide, or a carbon monoxide storage facility, etc. The formic acid produced in the first chamber 3a flows out of the first chamber 3a together with the carbon dioxide absorption and reduction solution 2 via the first outflow line 8b, and the formic acid is separated from the carbon dioxide absorption and reduction solution 2 in the separation device 10 and sent to a facility that uses formic acid, or a formic acid storage facility, etc. The carbon dioxide absorption and reduction solution 2 from which formic acid has been separated in the separation device 10 can be returned to the first chamber 3a via the return line 11. Oxygen produced in the second chamber 3b flows out of the second chamber 3b via the second outflow line 9 and is sent to a facility that uses oxygen, or an oxygen storage facility, etc.

The pump 18 causes part of the carbon dioxide absorption and reduction solution 2 in the first chamber 3a to flow out of the first chamber 3a through the outflow line 13. The carbon dioxide absorption and reduction solution 2 flowing through the outflow line 13 is supplied to the absorption tower 14, falls in the absorption tower 14, and comes into gas-liquid contact with the combustion gas rising in the absorption tower 14 as the absorption solution.

Thus, by using the carbon dioxide absorption and reduction solution that contains a metal complex and a basic additive having an amidine structure or a guanidine structure in a protic polar solvent as the electrolytic solution for electrochemical reduction of carbon dioxide, it is possible to selectively produce carbon monoxide. The effect of selectivity to produce carbon monoxide will be described based on the following Examples.

In the carbon dioxide absorption and reduction device 1 shown in FIG. 2, carbon dioxide is absorbed by the absorption solution as a result of gas-liquid contact between the gas containing carbon dioxide and the absorption solution in the absorption tower 14. The absorption solution that has absorbed carbon dioxide is supplied to the regeneration tower 21 through the supply line 12. In the regeneration tower 21, the absorption solution is heated by a heat exchanger 23 to release carbon dioxide. The released carbon dioxide is supplied into the first chamber 3a through the gas supply line 26 by the compressor 27. At least part of the carbon dioxide supplied into the first chamber 3 dissolves in the carbon dioxide absorption and reduction solution 2. After a certain amount of carbon dioxide is dissolved in the carbon dioxide absorption and reduction solution 2, the DC power supply 7 applies a voltage between the cathode 5 and the anode 6, so that the carbon dioxide dissolved in the carbon dioxide absorption and reduction solution 2 is reduced according to the above principle.

In the carbon dioxide absorption and reduction device 1 shown in FIG. 3, carbon dioxide is separated from a gas containing carbon dioxide in the membrane separation device 30. The separated carbon dioxide is supplied into the first chamber 3a through the gas supply line 26 by the compressor 27. At least part of the carbon dioxide supplied into the first chamber 3 dissolves in the carbon dioxide absorption and reduction solution 2. After a certain amount of carbon dioxide is dissolved in the carbon dioxide absorption and reduction solution 2, the DC power supply 7 applies a voltage between the cathode 5 and the anode 6, so that the carbon dioxide dissolved in the carbon dioxide absorption and reduction solution 2 is reduced according to the above principle.

### (Examples)

Experiments were conducted to reduce carbon dioxide by electrolysis using carbon dioxide absorption and reduction solutions of Examples 1 to 3 and Comparative Examples 1 and 2 listed in Table 1 below as the electrolytic solution. The metal complex contained in each carbon dioxide absorption and reduction solution is metal complex (4) below. In the metal complex (4), "Et" is an ethyl group.

**(Table 1)**

| Example/ Comparative Example | Protic polar solvent (a) | Additive (b) | Concentration of additive [mM] |
|---|---|---|---|
| Example 1 | Ethanol | DBU | 334 |
| Example 2 | Ethanol | DBU | 10 |
| Example 3 | Ethanol | TMG | 10 |
| Comparative Example 1 | Ethanol-Triethylamine (5:1 vol/vol) | - | - |
| Comparative Example 2 | Ethanol | Sodium ethoxide | 100 |

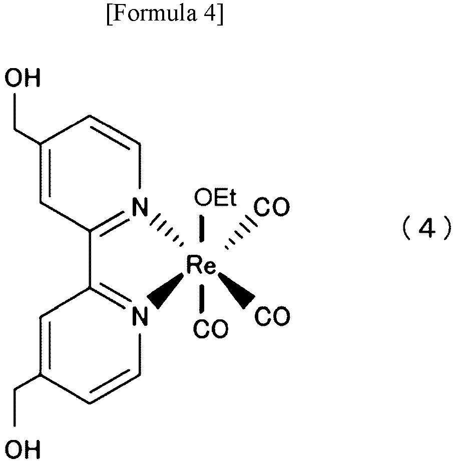

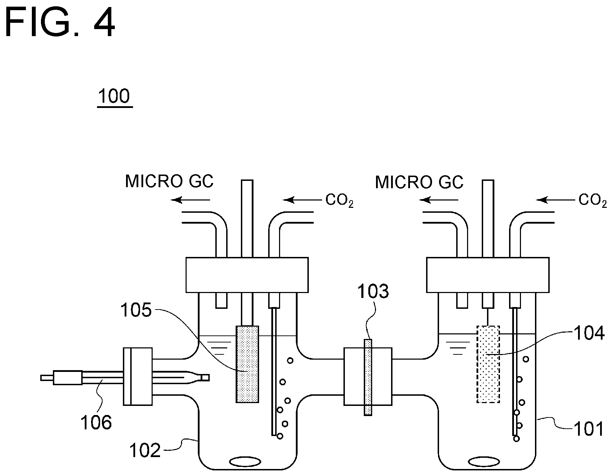

The electrolysis experiments using the carbon dioxide absorption and reduction solutions of Examples 1 to 3 and Comparative Examples 1 and 2 as the electrolytic solution were performed using an H-shaped electrolysis cell 100 shown in FIG. 4. In the H-shaped electrolysis cell 100, an anode cell 101 and a cathode cell 102 are separated by a Nafion (trademark) membrane 103. The anode cell 101 was filled with 15 mL of a solution obtained by mixing 0.1 M tetrabutylammonium tetrafluoroborate as supporting electrolyte, 50 mM tetrabutylammonium acetate as electron donor, and additive (b) at the concentration shown in Table 1 in protic polar solvent (a) shown in Table 1. A platinum mesh electrode was used as a counter electrode 104. The cathode cell 102 was filled with 15 mL of a solution obtained by mixing 0.1 M tetrabutylammonium tetrafluoroborate as supporting electrolyte, 0.5 mM metal complex (4), and additive (b) at the concentrations shown in Table 1 in protic polar solvent (a) shown in Table 1. A glassy carbon plate electrode was used as a working electrode 105. An Ag/AgNO₃ (0.1 M) electrode was used as a reference electrode 106.

Under these conditions, a peak potential attributed to the first single-electron reduction of the metal complex (4) in a carbon dioxide atmosphere was applied. The peak potential of Examples 1 to 3 was -1.78 V (vs. Fc⁺/Fc), the peak potential of Comparative Example 1 was -1.85 V (vs. Fc⁺/Fc), and the peak potential of Comparative Example 2 was - 1.80 V (vs. Fc⁺/Fc). While applying the potential, a gas containing carbon dioxide was blown into both the anode cell 101 and the cathode cell 102, and the gas outlet was connected to an Agilent 490 micro GC (TCD detector) to analyze and quantify the gas phase products. The carbon dioxide reduction products (formic acid) in the liquid phase were analyzed by capillary electrophoresis by collecting the solution after electrolysis. In the experiments of Example 1 and Comparative Examples 1 and 2, a 100% carbon dioxide gas was used as the gas containing carbon dioxide. In Example 2, experiments were conducted using a 100% carbon dioxide gas and a gas composed of 10% carbon dioxide and 90% argon as the gas containing carbon dioxide. In the experiment of Example 3, a gas composed of 10% carbon dioxide and 90% argon was used as the gas containing carbon dioxide.

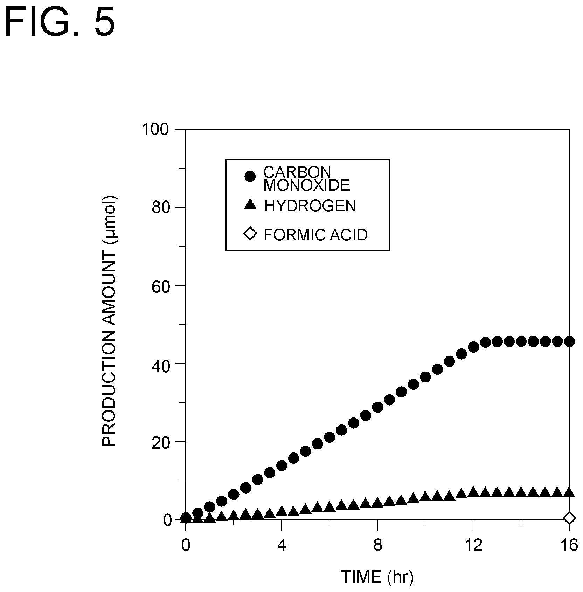

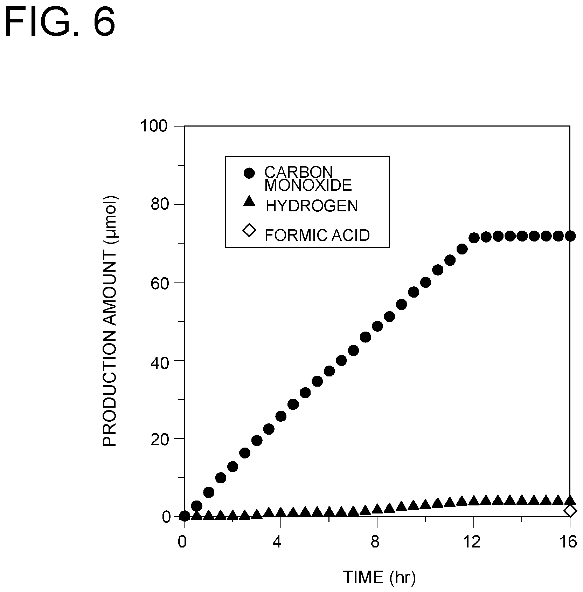

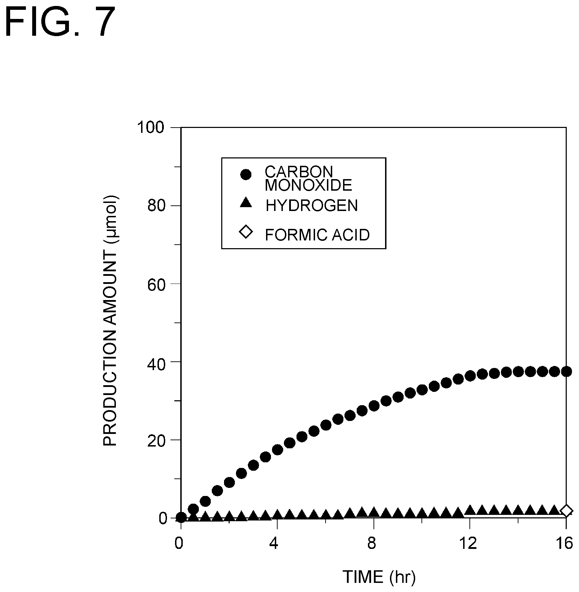

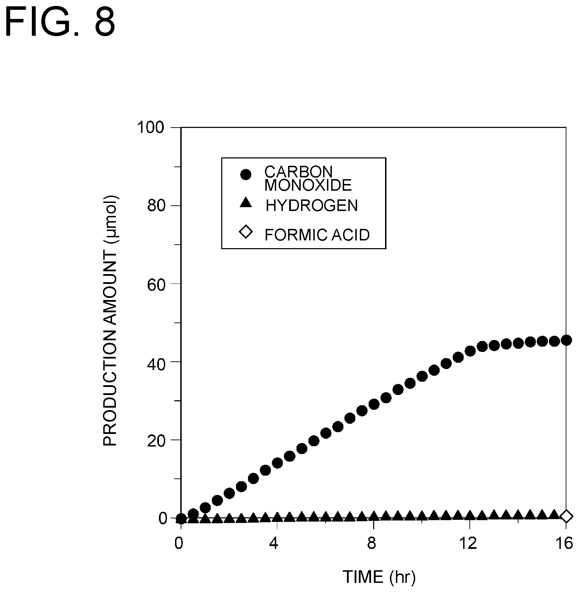

As shown in FIG. 5, when electrolysis was performed by blowing gas with 100% carbon dioxide concentration into the carbon dioxide absorption and reduction solution of Example 1 as the electrolytic solution, not only carbon monoxide but also hydrogen was produced, but the proportion of carbon monoxide produced was much larger than that of hydrogen. As shown in FIGs. 6 and 7, when electrolysis was performed by blowing gas with 100% carbon dioxide concentration or 10% carbon dioxide concentration into the carbon dioxide absorption and reduction solution of Example 2 as the electrolytic solution, the proportion of carbon monoxide produced was much larger than that of hydrogen, as was the case in Example 1. As shown in FIG. 8, when electrolysis was performed by blowing gas with 10% carbon dioxide concentration into the carbon dioxide absorption and reduction solution of Example 3 as the electrolytic solution, the proportion of carbon monoxide produced was much larger than that of hydrogen, as was the case in Example 1. In other words, carbon monoxide was selectively produced in Examples 1 to 3. FIGs. 6 and 7 also confirm that some formic acid was produced in the experiment using the carbon dioxide absorption and reduction solution of Example 2 as the electrolytic solution.

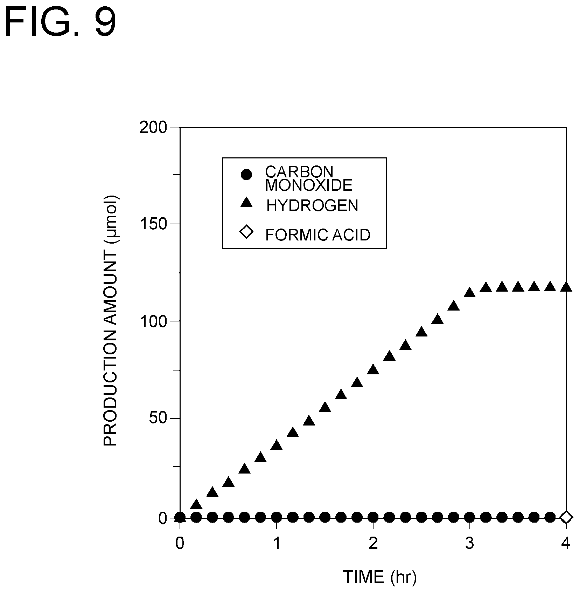

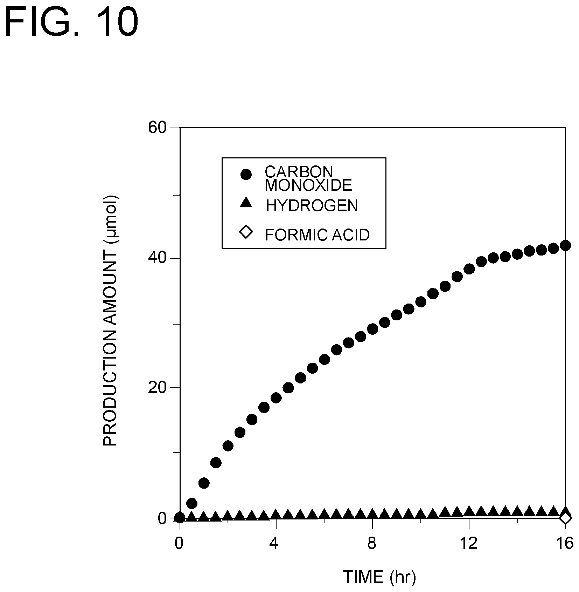

In contrast, when electrolysis was performed by blowing gas with 100% carbon dioxide concentration into the carbon dioxide absorption and reduction solution of Comparative Example 1 as the electrolytic solution, no carbon monoxide was produced, only hydrogen, as shown in FIG. 9. When electrolysis was performed by blowing gas with 100% carbon dioxide concentration into the carbon dioxide absorption and reduction solution of Comparative Example 2 as the electrolytic solution, carbon monoxide was produced at a higher proportion than hydrogen, as shown in FIG. 10, but precipitates were formed in the electrolytic solution, indicating that the electrolytic solution was not practical. The experimental results of Examples 1 to 3 and Comparative Examples 1 and 2 thus demonstrate that carbon monoxide can be selectively produced by using the carbon dioxide absorption and reduction solution of the present disclosure as the electrolytic solution for electrochemical reduction of carbon dioxide.

The contents described in the above embodiments would be understood as follows, for instance.
[1] A carbon dioxide absorption and reduction solution according to one aspect contains: 0.01 to 100 mM of a metal complex; and a basic additive having an amidine structure or a guanidine structure in a protic polar solvent.
   With the carbon dioxide absorption and reduction solution according to the present disclosure, by using this carbon dioxide absorption and reduction solution as an electrolytic solution for electrochemical reduction of carbon dioxide, it is possible to selectively produce carbon monoxide.
[2] A carbon dioxide absorption and reduction solution according to another aspect is the carbon dioxide absorption and reduction solution described in [1], in which the concentration of the additive is 10 to 334 mM.
   With this configuration, it is possible to selectively produce carbon monoxide by electrochemically reducing carbon dioxide.
[3] A carbon dioxide absorption and reduction solution according to still another aspect is the carbon dioxide absorption and reduction solution described in [1] or [2], in which the additive is tetramethylguanidine, diazabicycloundecene, diazabicyclononene, 1,5,7-triazabicyclo[4.4.0]deca-5-ene, 7-methyl-1,5,7-triazabicyclo[4.4.0]deca-5-ene, or a mixture of at least two thereof.
   With this configuration, it is possible to selectively produce carbon monoxide by electrochemically reducing carbon dioxide.
[4] A carbon dioxide absorption and reduction solution according to still another aspect is the carbon dioxide absorption and reduction solution described in any one of [1] to [3], in which the metal complex contains: a central metal; and a ligand which coordinates to the central metal, and the ligand has two or more carbonyl groups and two or more nitrogen atom-containing heterocycles.
   With this configuration, it is possible to selectively produce carbon monoxide by electrochemically reducing carbon dioxide.
[5] A carbon dioxide absorption and reduction solution according to still another aspect is the carbon dioxide absorption and reduction solution described in [4], in which the central metal is either rhenium, manganese, ruthenium, or iron.
   With this configuration, it is possible to selectively produce carbon monoxide by electrochemically reducing carbon dioxide.
[6] A carbon dioxide absorption and reduction solution according to still another aspect is the carbon dioxide absorption and reduction solution described in [4] or [5], in which at least one of the two or more nitrogen atom-containing heterocycles has at least one substituent including a carboxy group or a hydroxy group.
   With this configuration, it is possible to selectively produce carbon monoxide by electrochemically reducing carbon dioxide.
[7] A carbon dioxide absorption and reduction solution according to still another aspect is the carbon dioxide absorption and reduction solution described in any one of [1] to [6], in which the protic polar solvent is water, an alcohol solvent, an amine solvent, a thiol solvent, or an amino alcohol solvent.
   With this configuration, it is possible to selectively produce carbon monoxide by electrochemically reducing carbon dioxide.
[8] A carbon dioxide absorption and reduction device according to one aspect includes an electrolysis device (3) containing the carbon dioxide absorption and reduction solution (2) described in any one of [1] to [7].
   With the carbon dioxide absorption and reduction device of the present disclosure, by electrochemically reducing carbon dioxide using the carbon dioxide absorption and reduction solution described in any one of [1] to [7], it is possible to selectively produce carbon monoxide.
[9] A carbon dioxide absorption and reduction device according to another aspect is the carbon dioxide absorption and reduction device described in [8], including: a supply line (12) for supplying the carbon dioxide absorption and reduction solution that has absorbed carbon dioxide into the electrolysis device (3); and an outflow line (13) through which the carbon dioxide absorption and reduction solution (2) flows out of the electrolysis device (3).
   With this configuration, it is possible to selectively produce carbon monoxide by electrochemically reducing carbon dioxide.
[10] A carbon dioxide absorption and reduction device according to still another aspect is the carbon dioxide absorption and reduction device described in [9], further including: an absorption tower (14) configured to bring a gas containing carbon dioxide into contact with the carbon dioxide absorption and reduction solution so that carbon dioxide is absorbed by the carbon dioxide absorption and reduction solution. The carbon dioxide absorption and reduction solution that has absorbed carbon dioxide in the absorption tower (14) is supplied into the electrolysis device (3) through the supply line (12), and the carbon dioxide absorption and reduction solution flowing out of the electrolysis device (3) through the outflow line (13) is supplied to the absorption tower (14) and comes into contact with the gas.
   With this configuration, the carbon dioxide absorption and reduction solution that contains carbon dioxide absorbed from the gas containing carbon dioxide can be continuously supplied to the electrolysis device, so that it is possible to continuously obtain high-concentration carbon monoxide gas.
[11] A carbon dioxide absorption and reduction device according to still another aspect is the carbon dioxide absorption and reduction device described in [8], including: a carbon dioxide recovery device (20) for recovering carbon dioxide from a gas containing carbon dioxide; and a gas supply line (26) for supplying carbon dioxide recovered in the carbon dioxide recovery device (20) to the carbon dioxide absorption and reduction solution (2) contained in the electrolysis device (3).
   With this configuration, carbon dioxide can be reduced using high-concentration carbon dioxide gas recovered from the gas containing carbon dioxide.
[12] A carbon dioxide absorption and reduction device according to still another aspect is the carbon dioxide absorption and reduction device described in [11], in which the carbon dioxide recovery device (20) includes: an absorption tower (14) configured to bring the gas containing carbon dioxide into contact with an absorption solution so that carbon dioxide is absorbed by the absorption solution; and a regeneration tower (21) configured to release carbon dioxide from the absorption solution that has absorbed carbon dioxide. Carbon dioxide released in the regeneration tower (21) is supplied to the carbon dioxide absorption and reduction solution (2) contained the electrolysis device (3) through the gas supply line (26).
   With this configuration, carbon dioxide can be reduced using high-concentration carbon dioxide gas recovered from the gas containing carbon dioxide.
[13] A carbon dioxide absorption and reduction method according to one aspect includes: a step of supplying carbon dioxide to the carbon dioxide absorption and reduction solution (2) described in any one of [1] to [7]; and a step of electrolyzing the carbon dioxide absorption and reduction solution (2) supplied with carbon dioxide.
   With the carbon dioxide absorption and reduction method of the present disclosure, by electrochemically reducing carbon dioxide using the carbon dioxide absorption and reduction solution described in any one of [1] to [7], it is possible to selectively produce carbon monoxide.
[14] A carbon dioxide absorption and reduction method according to another aspect is the carbon dioxide absorption and reduction method described in [13], in which at least carbon monoxide is produced by electrolyzing the carbon dioxide absorption and reduction solution (2).

With this method, at least carbon monoxide is produced by reduction of carbon dioxide, so that it is possible to use carbon monoxide.

### Reference Signs List

- 1: Carbon dioxide absorption and reduction device
- 2: Carbon dioxide absorption and reduction solution
- 3: Electrolysis device
- 12: Supply line
- 13: Outflow line
- 14: Absorption tower
- 20: Carbon dioxide recovery device
- 21: Regeneration tower
- 26: Gas supply line

## Claims

1. A carbon dioxide absorption and reduction solution, comprising: 0.01 to 100 mM of a metal complex; and a basic additive having an amidine structure or a guanidine structure in a protic polar solvent.

2. The carbon dioxide absorption and reduction solution according to claim 1,
wherein a concentration of the additive is 10 to 334 mM.

3. The carbon dioxide absorption and reduction solution according to claim 1 or 2,
wherein the additive is tetramethylguanidine, diazabicycloundecene, diazabicyclononene, 1,5,7-triazabicyclo[4.4.0]deca-5-ene, 7-methyl-1,5,7-triazabicyclo[4.4.0]deca-5-ene, or a mixture of at least two thereof.

4. The carbon dioxide absorption and reduction solution according to claim 1 or 2,
wherein the metal complex contains:
a central metal; and
a ligand which coordinates to the central metal, and
wherein the ligand has two or more carbonyl groups and two or more nitrogen atom-containing heterocycles.

5. The carbon dioxide absorption and reduction solution according to claim 4,
wherein the central metal is either rhenium, manganese, ruthenium, or iron.

6. The carbon dioxide absorption and reduction solution according to claim 4,
wherein at least one of the two or more nitrogen atom-containing heterocycles has at least one substituent including a carboxy group or a hydroxy group.

7. The carbon dioxide absorption and reduction solution according to claim 1 or 2,
wherein the protic polar solvent is water, an alcohol solvent, an amine solvent, a thiol solvent, or an amino alcohol solvent.

8. A carbon dioxide absorption and reduction device, comprising an electrolysis device containing the carbon dioxide absorption and reduction solution according to claim 1 or 2.

9. The carbon dioxide absorption and reduction device according to claim 8, comprising:
a supply line for supplying the carbon dioxide absorption and reduction solution that has absorbed carbon dioxide into the electrolysis device; and
an outflow line through which the carbon dioxide absorption and reduction solution flows out of the electrolysis device.

10. The carbon dioxide absorption and reduction device according to claim 9, further comprising an absorption tower configured to bring a gas containing carbon dioxide into contact with the carbon dioxide absorption and reduction solution so that carbon dioxide is absorbed by the carbon dioxide absorption and reduction solution,
wherein the carbon dioxide absorption and reduction solution that has absorbed carbon dioxide in the absorption tower is supplied into the electrolysis device through the supply line, and the carbon dioxide absorption and reduction solution flowing out of the electrolysis device through the outflow line is supplied to the absorption tower and comes into contact with the gas.

11. The carbon dioxide absorption and reduction device according to claim 8, comprising:
a carbon dioxide recovery device for recovering carbon dioxide from a gas containing carbon dioxide; and
a gas supply line for supplying carbon dioxide recovered in the carbon dioxide recovery device to the carbon dioxide absorption and reduction solution contained in the electrolysis device.

12. The carbon dioxide absorption and reduction device according to claim 11,
wherein the carbon dioxide recovery device includes:
an absorption tower configured to bring the gas containing carbon dioxide into contact with an absorption solution so that carbon dioxide is absorbed by the absorption solution; and
a regeneration tower configured to release carbon dioxide from the absorption solution that has absorbed carbon dioxide, and
wherein carbon dioxide released in the regeneration tower is supplied to the carbon dioxide absorption and reduction solution contained in the electrolysis device through the gas supply line.

13. A carbon dioxide absorption and reduction method, comprising:
a step of supplying carbon dioxide to the carbon dioxide absorption and reduction solution according to claim 1 or 2; and
a step of electrolyzing the carbon dioxide absorption and reduction solution supplied with carbon dioxide.

14. The carbon dioxide absorption and reduction method according to claim 13,
wherein at least carbon monoxide is produced by electrolyzing the carbon dioxide absorption and reduction solution.
